# EUROPÄISCHE PATENTANMELDUNG

(11) **EP 0 965 427 A1**
(43) Veröffentlichungstag der Anmeldung: **22.12.1999**
(21) Anmeldenummer: 99890181.3
(22) Anmeldetag: 02.06.1999
(51) Int. Cl.: B29C 45/14, A63B 49/14

(54) **Spritzgussverfahren zum Herstellen von Kopfbändern von Tennisschlägern sowie Vorrichtung zur Durchführung dieses Verfahrens**

(30) Priorität: 18.06.1998 AT 41098
(71) Anmelder: Head Sport Aktiengesellschaft, A-6921 Kennelbach (AT)
(72) Erfinder: Köstinger, Iris, Dipl.-Ing., 6911 Lochau (AT)
(74) Vertreter: Haffner, Thomas M., Dr.

(57) **Zusammenfassung**

Bei einem Spritzgußverfahren zum Herstellen von Kopfbändern (4) von Tennisschlägern (1) wird eine Dekorschicht in die Form (13,14) eingebracht und das Material des Kopfbandes (4) nach dem Schließen der Form (13,14) über das Spritzgießwerkzeug (15) eingebracht. Die Vorrichtung zur Durchführung des Verfahrens weist eine Folienverschubeinrichtung mit quer zu einem Spritzgießwerkzeug (15) verlaufender Verschubrichtung auf, deren schrittweiser Vorschubantrieb mit dem Öffnen der Spritzgußform gekoppelt ist.

## Beschreibung

Die Erfindung bezieht sich auf ein Spritzgußverfahren zum Herstellen von Kopfbändern von Tennisschlägern sowie auf eine Vorrichtung zur Durchführung dieses Verfahrens.

Kopfbänder von Tennisschlägern werden üblicherweise zum Schutz des Schlägerkopfes an der Außenseite des Bespannungsovales im Bereich des Schlägerkopfes angeordnet und weisen Durchbrechungen für das Durchführen von Saiten auf. Üblicherweise werden derartige Kopfbänder mit Spritzgußverfahren hergestellt, wobei als Material Kunststoffe gewählt werden, welche sich durch eine relativ gute Abriebfestigkeit auszeichnen und gleichzeitig hinreichend flexibel sind, um sich der Form des Schlägerkopfes anzupassen. Kopfbänder werden in der Regel einfarbig hergestellt, wobei das Aufbringen von Dekors auf derartige Kopfbänder aufgrund des hohen damit verbundenen Aufwandes bei der Einzelherstellung bisher unterlassen wurde.

Dekors können in der Folge auf die im Spritzgußverfahren hergestellten Kopfbänder, beispielsweise im Siebdruckverfahren aufgebracht werden, wodurch jedoch in jedem Fall ein gesonderter Arbeitsschritt erforderlich wird, was die wirtschaftliche Herstellung von mit einem Dekor versehenen Kopfbändern wesentlich erschwert.

Die Erfindung zielt nun darauf ab, ein Spritzgußverfahren zum Herstellen von Kopfbändern der eingangs genannten Art zu schaffen, mit welchem gleichzeitig die Möglichkeit geschaffen wird, das Kopfband in der gewünschten Weise mit einem Dekor zu versehen, ohne daß hiefür ein gesonderter Arbeitsschritt erforderlich wäre. Zur Lösung dieser Aufgabe besteht das erfindungsgemäße Verfahren im wesentlichen darin, daß eine Dekorschicht in die Form eingebracht und das Material des Kopfbandes nach dem Schließen der Form über das Spritzgießwerkzeug eingebracht wird. Dadurch, daß die Dekorschicht in die Form eingebracht wird, wird das Dekor beim Spritzgußvorgang dauerhaft und abriebfest mit dem Kopfband verbunden, wobei sich eine derartige Verfahrensweise auch für die rasche getaktete Serienproduktion von Kopfbändern eignet. Während das einzelne Einlegen von Dekorschichten in die Form zwar Vorteile in bezug auf die exakte Positionierung des Dekors bietet und insbesondere auch erlaubt, der Verformung des Kopfbandes im Dekor entsprechend Rechnung zu tragen, wird das erfindungsgemäße Verfahren mit Vorteil so durchgeführt, daß die Dekorschicht auf einer Trägerfolie angebracht wird, welche quer zum Schließhub der Form schrittweise vorgeschoben wird. Ein derartig getakteter bzw. schrittweiser Vorschub, der mit dem Dekor versehenen Trägerfolie, erlaubt die Herstellung des fertigdekorierten Kopfbandes mit kurzen Zykluszeiten, sodaß eine wirtschaftliche Serienproduktion ermöglicht wird. Gleichzeitig wird mit der Verschiebung der Trägerfolie nach dem Transfer des Dekors auf das gespritzte Kopfband jeweils eine Formhälfte für den nächsten Spritzgußvorgang vorbereitet, wobei mit Vorzug so vorgegangen wird, daß die Trägerfolie anschließend an den Spritzvorgang abgezogen wird. Der Aufbau der Dekorfolie, welche quer zum Spritzgußwerkzeug vorgeschoben wird, umfaßt hiebei eine Trägerfolie, beispielsweise aus Polyester, eine Trennschicht, mit deren Hilfe sich die Trägerfolie vom Spritzteil abziehen läßt, eine Schutzlackschicht für das fertige Dekor, eine Farbschicht und eine Klebeschicht für die gute Haftung der Farbschicht zur Spritzmasse. Die Dekorfolie kann prinzipiell in verschiedener Weise positioniert werden. Zum einen kann das Dekor auf die Sichtseite des Kopfbandes aufgebracht werden, wobei in diesem Falle die Spritzmasse beliebig gefärbt sein kann. Wenn das Dekor auf der Rückseite des Kopfbandes, welche nach der Montage an der Außenseite des Schlägerkopfes anliegt, aufgebracht wird, muß die Spritzmasse naturgemäß transparent sein, um das Dekor in der Folge noch erkennen zu können. Die Trägerfolie kann in jedem Falle transparent ausgebildet sein und wird vom fertiggestellten Kopfband jeweils abgezogen. Zu diesem Zeitpunkt ist die Haftung zwischen Trägerfolie und Spritzteil beim Öffnen des Spritzgußwerkzeuges bereits so gering, daß das Spritzteil aufgrund der Schwerkraft von der im wesentlichen vertikal orientierten Trägerfolie abfallen kann.

Um die Flexibilität des Kopfbandes zur besseren Anpassung an das Bespannungsoval zu erhöhen, wird mit Vorteil so vorgegangen, daß die Kopfbänder im Anschluß an den Spritzgußvorgang an ihren Seitenrändern durch Ausstanzen von Schlitzen gekerbt werden.

Eine besonders einfache Vorrichtung zur Durchführung des erfindungsgemäßen Verfahrens ist im wesentlichen dadurch gekennzeichnet, daß eine Folienverschubeinrichtung mit quer zu einem Spritzgießwerkzeug verlaufender Verschubrichtung angeordnet ist, deren schrittweiser Vorschubantrieb mit dem Öffnen der Spritzgußform gekoppelt ist.

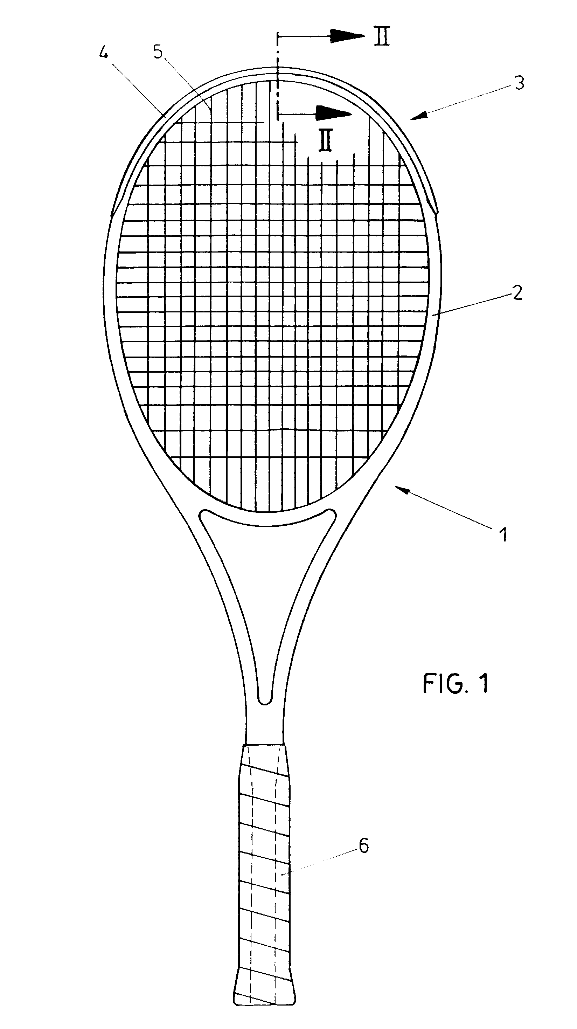

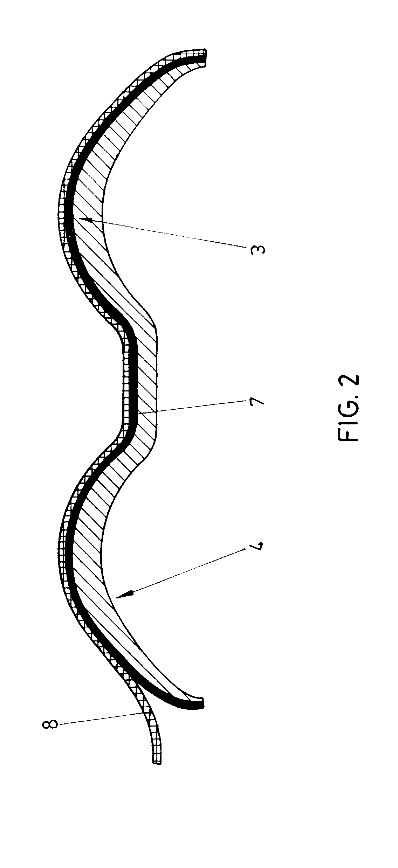

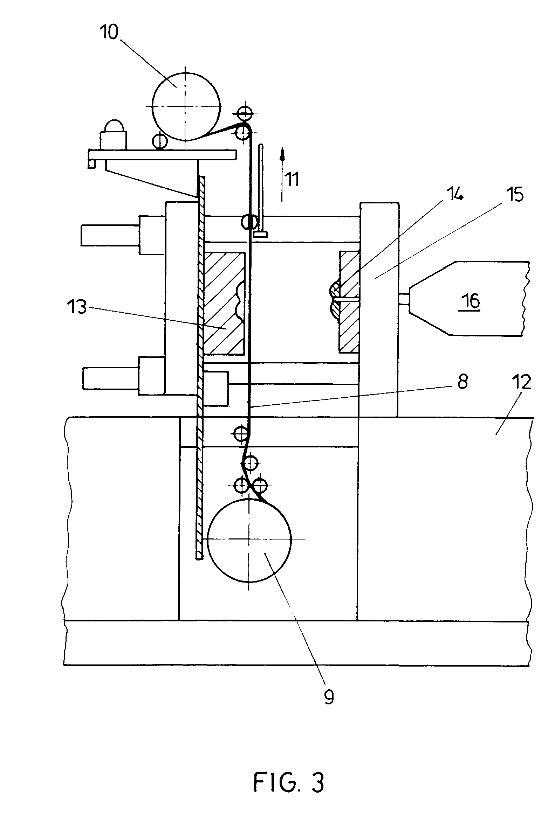

Die Erfindung wird nachfolgend anhand von in der Zeichnung schematisch dargestellten Ausführungsbeispielen näher erläutert. In dieser zeigen Fig. 1 eine Draufsicht auf einen mit einem Kopfband versehenen Tennisschläger samt Bespannung, Fig. 2 einen Schnitt nach der Linie II-II durch das Kopfband und Fig. 3 eine schematische Darstellung einer bevorzugten Vorrichtung für die Herstellung eines Kopfbandes entsprechend der Fig. 2.

In Fig. 1 ist ein Tennisschläger 1 ersichtlich, dessen Rahmenholme 2 im Bereich des Schlägerkopfes 3 mit einem Kopfband 4 versehen sind. Das Kopfband 4 erstreckt sich ausgehend von der Schlägermitte zu den beiden Seiten der Rahmenholme 2 und weist Ösen bzw. Durchbrechungen für die Saiten 5 der Bespannung auf. Der Griff des Schlägers ist mit 6 bezeichnet.

In Fig. 2 ist das Kopfband 4 vergrößert im Schnitt dargestellt. Auf den Grundkörper des Kopfbandes 4 ist hiebei ein Dekor 7 aufgebracht, wobei die außenliegende Trägerfolie 8 nach dem Aufbringen des Dekors 7 vom Kopfband abgelöst wird und abgezogen werden kann.

In Fig. 3 ist eine schematische Darstellung der für die Durchführung des Spritzgußverfahrens geeigneten Vorrichtung veranschaulicht. Die mit einem Dekor versehene Folie 8 wird von einer Abzugsrolle 9 zu einer Aufwickelrolle 10 gefördert, wobei die Förderrichtung schematisch durch den Pfeil 11 angedeutet ist. Der Vorschub in Richtung des Pfeiles 11 erfolgt hiebei getaktet in Übereinstimmung mit den jeweiligen Zykluszeiten der Spritzgußmaschine, welche schematisch mit 12 angedeutet ist. Die Spritzgußmaschine enthält eine erste Formhälfte 13, gegen welche die zweite Formhälfte 14 anstellbar ist. Die Anstellbewegung der Formhälfte 14 gegen die Formhälfte 13 erfolgt quer zur Transportrichtung 11 der Folie 8. Das Spritzgußwerkzeug ist mit 15 bezeichnet und enthält einen Auswerfer 16, welcher quer zur Vorschubrichtung 11 verschiebbar angetrieben ist. Nach Positionierung der Folie 8 in der Formhälfte 13 wird die Formhälfte 14 des Spritzgußwerkzeuges 15 gegen die Formhälfte 13 und damit gegen die Dekorfolie, deren Trägerfolie mit 8 bezeichnet ist, angestellt, worauf ein Kopfband hinterspritzt wird. Nach dem Erhärten der Spritzgußmasse wird die Formhälfte 14 zurückgezogen, worauf die Trägerfolie 8 in Richtung des Pfeiles 11 um einen Schritt versetzt wird und ein neuerlicher Spritzgußvorgang vorgenommen werden kann.

## Patentansprüche

1. Spritzgußverfahren zum Herstellen von Kopfbändern von Tennisschlägern, dadurch gekennzeichnet, daß eine Dekorschicht in die Form (13,14) eingebracht und das Material des Kopfbandes (4) nach dem Schließen der Form (13,14) über das Spritzgießwerkzeug (15) eingebracht wird.

2. Spritzgußverfahren nach Anspruch 1, dadurch gekennzeichnet, daß die Dekorschicht auf einer Trägerfolie (8) angebracht wird, welche quer zum Schließhub der Form schrittweise vorgeschoben wird.

3. Spritzgußverfahren nach Anspruch 1 oder 2, dadurch gekennzeichnet, daß die Trägerfolie (8) anschließend an den Spritzvorgang abgezogen wird.

4. Spritzgußverfahren nach Anspruch 1, 2, oder 3, dadurch gekennzeichnet, daß die Kopfbänder (4) im Anschluß an den Spritzgußvorgang an ihren Seitenrändern durch Ausstanzen von Schlitzen gekerbt werden.

5. Vorrichtung zur Durchführung des Verfahrens nach einem der Ansprüche 1 bis 4, dadurch gekennzeichnet, daß eine Folienverschubeinrichtung mit quer zu einem Spritzgießwerkzeug (15) verlaufender Verschubrichtung angeordnet ist, deren schrittweiser Vorschubantrieb mit dem Öffnen der Spritzgußform (13,14) gekoppelt ist.
